# FASCICULE DE BREVET EUROPEEN

(11) **EP 0 390 854 B1**
(45) Date de publication et mention de la délivrance du brevet: **03.03.1993**
(21) Numéro de dépôt: 89900840.3
(22) Date de dépôt: 23.12.1988
(51) Int. Cl.: B62C 5/02, B62C 1/00

(54) **DISPOSITIF D'ATTELAGE POUR VEHICULE HIPPOMOBILE A MONOBRANCARD**
PFERDEGESCHIRREINRICHTUNG FÜR PFERDEWAGEN MIT EINZELTRAGEBAUM
HARNESSING DEVICE FOR SINGLE SHAFT HORSE-DRAWN VEHICLE

(30) Priorité: 23.12.1987 FR 8718019
(43) Date de publication de la demande: 10.10.1990
(73) Titulaire: PROUST, Stéphane, 95340 Persan (FR)
(72) Inventeur: PROUST, Stéphane, 95340 Persan (FR)
(74) Mandataire: Cournarie, Michèle
(86) Numéro de dépôt international: FR8800638
(87) Numéro de publication internationale: WO8905748

(56) Documents cités:
- DE-C- 146 784
- FR-A- 338 948
- FR-A- 2 589 418
- GB-A- 16 851
- US-A- 4 473 991

## Description

L'invention concerne un dispositif d'attelage pour véhicule hippomobile à monobrancard passant au-dessus du dos du cheval.

Un dispositif de ce type et un véhicule hippomobile adapté sont décrits dans le document FR-A-2 589418.

Le dispositif d'attelage comporte un monobrancard passant au dessus du dos du cheval et relié, à sa partie avant, à un harnais par l'intermédiaire d'un berceau sur lequel le monobrancard est monté sur pivot et, à sa partie arrière, à un véhicule hippomobile. Les arceaux reposent directement sur le dos du cheval et un simple rembourrage assure le confort du cheval.

Ce dispositif constitue une amélioration indéniable des dispositifs d'attelage à monobrancard antérieurs. Dans l'antiquité, on utilisait un monobrancard monté sur un collier de cou mais de très faible rendement puisqu'il comprimait les jugulaires du cheval et l'attelage ne bénéficiait pas de la totalité des efforts de traction du cheval. D'autres dispositifs utilisent une sellette analogue à celles d'un harnais classique, mais placée sur le dos du cheval et portant à sa partie supérieure l'extrémité antérieure du brancard. De même que dans le cas des chars antiques, les efforts de traction du cheval ne sont pas entièrement transmis et en règle générale il n'est possible de tracter qu'un sulky.

Un brevet français N° 712 758 décrit un berceau de traction associé à un monobrancard par une articulation verticale et auquel est fixée une paire de traits. Ce dispositif permet de tracter des outils agricoles, le travail se faisant au pas, mais n'est pas utilisable aux autres allures du cheval.

L'inconvénient principal du dispositif de FR-A-2589418 est que le rembourrage des arceaux n'empêche pas le cheval de se blesser à la longue en raison du frottement qui se produit, ce qui limite bien entendu les possibilités d'utilisation de ce dispositif.

L'invention fournit donc un dispositif du type décrit précédemment, dans lequel le berceau comporte deux arceaux réunis à leur partie inférieure pour la jonction avec un harnais et s'écartant progressivement l'un de l'autre jusqu'à atteindre une distance maximum à l'aplomb du garrot du cheval, un élément solidaire du monobrancard étant monté en rotation sur un organe reliant les deux arceaux au niveau de leur écartement maximum, et le berceau repose, par l'intermédiaire de deux volets articulés montés sur l'arceau arrière disposé obliquement pratiquement parallèlement à l'axe omoplate - jointe de l'épaule du cheval et situés de part et d'autre de la ligne médiane du dos du cheval, sur les muscles superficiels à la jonction du dos, du garrot et de l'épaule du cheval.

La face interne des volets en contact avec le dos du cheval peut être rembourrée et présente une section droite convexe, dans la zone centrale du volet, dans un plan perpendiculaire au plan de l'arceau arrière, les parties latérales du volet de part et d'autre de l'arceau présentant une section concave dans des plans parallèles au plan de l'arceau, et une section droite concave dans la zone centrale du volet, dans un plan parallèle au plan de l'arceau, les parties supérieure et inférieure du volet présentant elles une section convexe dans des plans perpendiculaires au plan de l'arceau. Avantageusement la partie supérieure du volet forme une pointe et la partie inférieure un gros bout, donnant au volet une forme ovoïde dont ce gros bout constitue la base. Du fait de cette forme, le volet repose par sa convexité centrale dans le creux situé entre l'épaule et le dos du cheval, les deux concavités latérales permettant de loger les muscles correspondants sur lesquels le volet prend appui alternativement lors des mouvements du cheval; tandis que la concavité centrale permet au volet d'être positionné sur les muscles croisés du cheval, les deux convexités supérieure et inférieure amenant le volet en contact avec les creux situés de part et d'autre de la jonction des muscles superficiels du dos, du garrot et de l'épaule du cheval (respectivement grand dorsal, trapèze dorsal et triceps). En raison de cette forme et de l'articulation du volet sur son support, le déplacement de va-et-vient horizontal de l'omoplate provoque un basculement du volet autour de l'arceau arrière en maintenant le contact entre le volet et le dos du cheval.

Afin de favoriser ce basculement autour de l'axe de l'arceau arrière, le volet est monté pivotant en deux points et de préférence grâce à deux rotules montées l'une fixe sur l'arceau et mobile sur le volet et l'autre fixe sur le volet et mobile sur l'arceau.

Afin de faciliter encore l'effort de traction du cheval, le monobrancard porté par le berceau est avantageusement relié au véhicule a roues par l'intermédiaire d'un dispositif amortisseur-suspenseur. Celui-ci comporte de préférence un anneau élastique tendu selon un axe perpendiculaire à l'axe longitudinal de l'attelage véhicule hippomobile/monobrancard, entre deux points de fixation sur ledit véhicule. Un dispositif d'équilibrage réglable relie la partie centrale de l'anneau élastique au monobrancard.

D'autres avantages et caractéristiques de la présente invention apparaîtront à la lecture de la description détaillée suivante, faite en référence aux dessins annexés dans lesquels :
la figure 1 est une vue d'ensemble de côté de l'attelage utilisant un berceau de traction,
la figure 2 est une vue de dessus du véhicule hippomobile et du monobrancard utilisant le berceau de traction
la figure 3 est une vue de côté du dispositif de la figure 2,
la figure 4 est une vue représentant le positionnement du berceau de traction par rapport à l'anatomie du cheval;
la figure 5 est une vue de face (partie droite) du berceau de traction et une vue de l'arrière (partie gauche),
les figures 6 et 7 représentent schématiquement les mouvements des épaules du cheval et ceux des volets du berceau de traction, respectivement,
La figure 8 est une vue de dessus, agrandie, du dispositif amortisseur,
La figure 9 est une vue de devant montrant la fixation du harnais au berceau de traction.

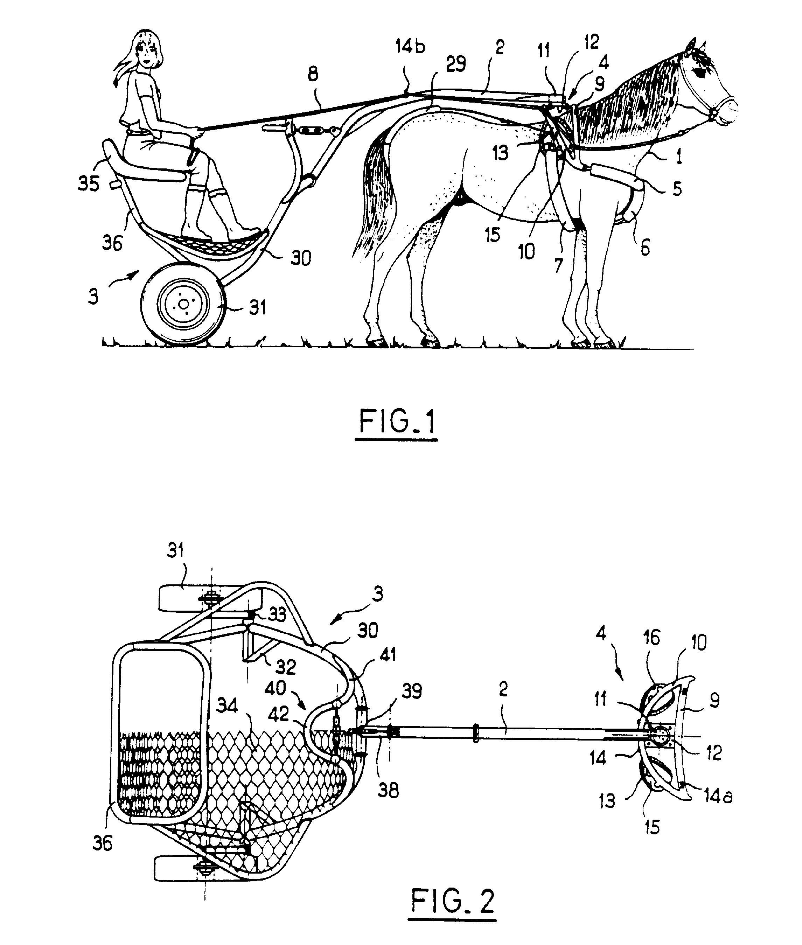

Sur la figure 1, est représenté un cheval 3 attelé à un véhicule hippomobile 1 à deux roues par l'intermédiaire d'un monobrancard 2. Ce monobrancard repose sur le cheval par l'intermédiaire d'un berceau de traction 4, d'un collier 5, 6 et d'une sous-ventrière 7, ces deux derniers éléments constituant le harnais. Des rênes 8 permettent de guider le cheval de façon classique.

Le berceau de traction 4 comporte deux arceaux 9,10 réunis à leur partie inférieure pour la jonction avec le collier 5 et s'écartant progressivement l'un de l'autre jusqu'à atteindre une distance maximum à l'aplomb du garrot du cheval, l'arceau arrière 10 vu de dessus (figure 2) présentant un rayon de courbure plus faible que l'arceau avant 9. L'arceau avant se trouve dans un plan peu écarté de la verticale tandis que l'arceau arrière est nettement oblique par rapport à la verticale. Un pivot 11 solidaire du monobrancard 2 est monté sur un organe 12 (par exemple une plaque) reliant les deux arceaux 9 et 10, au niveau de leur écartement maximal et permet la libre rotation du monobrancard par rapport au cheval.

Les rênes 8 passent chacune de chaque côté du berceau dans un oeillet 14a sur l'arceau avant puis dans un oeillet 14 (figure 2) situé sur l'arceau arrière puis toutes deux dans le même oeillet 14b sur le monobrancard 2.

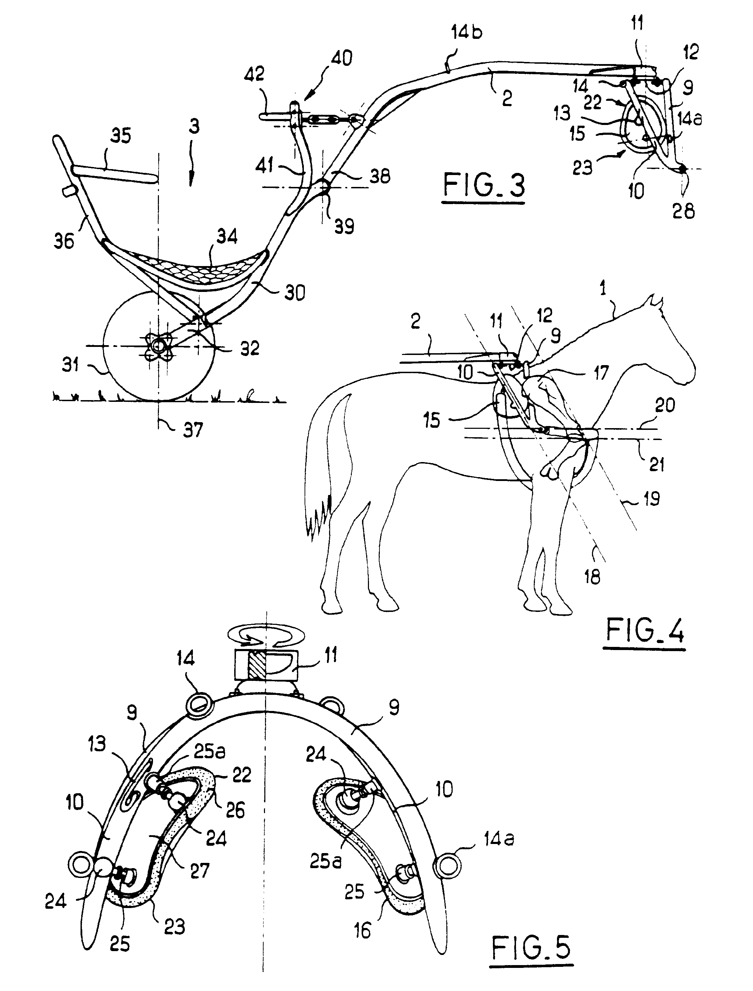

Le berceau de traction 4 prend appui sur le dos du cheval par l'intermédiaire de deux volets 15,16, montés tous deux sur l'arceau arrière 11, disposes de part et d'autre de la ligne médiane du dos du cheval et symétriques par rapport à cette ligne. Chaque volet prend appui dans le creux anatomique situé à l'arrière de l'omoplate 17 du cheval (figure 4) et la face interne du volet, en contact avec le dos du cheval est rembourrée et présente plusieurs convexités et concavités. Les volets 15,16 ont de préférence une forme ovoïde présentant une pointe 22 et un gros bout 23, ce dernier constituant la base du volet.

Chacun des volets 15,16 est monté sur l'arceau arrière par l'intermédiaire de deux articulations par exemple de deux rotules 24 montées sur des tiges fixes 25,25a. La tige 25a située à la partie supérieure du volet 15,16 et la tige 25 à la base du volet sont montées en inversion, c'est-à-dire que la tige 25a est montée sur l'arceau et la rotule qu'elle porte repose sur le volet alors que la tige 25 est montée sur le volet et sa rotule repose sur l'arceau. La longueur des tiges fixes peut être modifiée par vissage ou dévissage de façon à permettre la fabrication standardisée de berceaux pour n'importe quel dos de cheval.

Comme indiqué précédemment, chaque volet 15,16 comporte sur sa face interne un rembourrage 26 sur une plaque de base 27, les deux étant conformés de façon à venir s'adapter à l'anatomie du cheval à l'arrière de l'omoplate de celui-ci. Pour ce faire, la face interne des volets en contact avec le dos du cheval est rembourrée et présente une section droite convexe, dans la zone centrale du volet, dans un plan perpendiculaire au plan de l'arceau arrière, les parties latérales du volet de part et d'autre de l'arceau présentant une section concave au plan de l'arceau, et une section droite concave dans la zone centrale du volet, dans un plan parallèle au plan de l'arceau, les parties supérieure et inférieure du volet présentant elles une section convexe dans des plans perpendiculaires au plan de l'arceau.

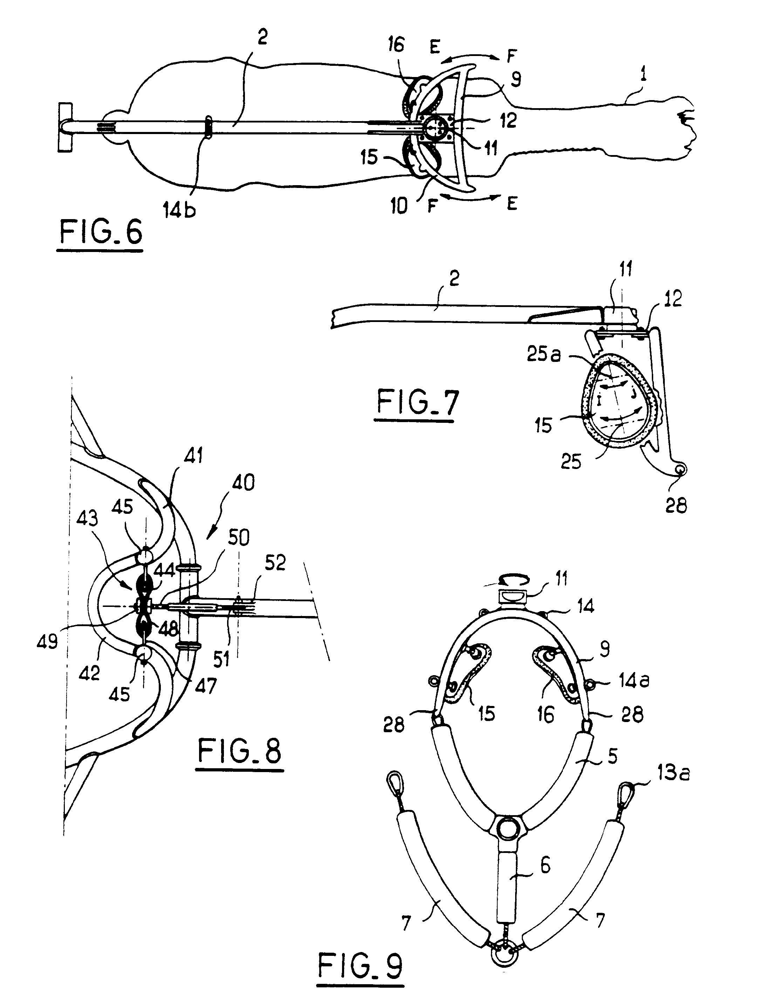

Lorsque le cheval avance et quelle que soit son allure (pas, trot ou galop), ses épaules avancent alternativement et sont animées d'un mouvement représenté schématiquement sur la figure 6, par les flèches E-F. Du fait des articulations à rotules, les volets suivent les mouvements des omoplates du cheval en basculant, autour de l'axe reliant les deux articulations, vers l'avant lorsque c'est l'épaule correspondante qui avance et vers l'arrière lorsque celle-ci est en retrait. Ceci est représenté schématiquement sur la figure 7, par les flèches I et J, les points d'articulation étant symbolisés par les tiges 25 et 25a. Du fait du montage de la rotule de la tige 25a sur le volet, le mouvement de bascule à la pointe du volet est de moindre amplitude qu'à la base et ceci correspond au fait que l'amplitude de mouvement de l'omoplate du cheval est inférieure au niveau de la pointe du volet par rapport à celle existant à la base du volet.

Le berceau de traction 4 est maintenu en place sur le cheval par l'intermédiaire d'un collier 5, 6 et d'une sous-ventrière 7 (figure 9). Le collier est de préférence un collier de chasse de type américain ("breath collar"), c'est-à-dire un collier en deux parties latérales 5 réunies par un anneau et est monté de façon fixe par un dispositif classique de boucles à l'extrémité 28 de la partie commune des deux arceaux 9 et 10. Une courroie 6 est montée sur l'anneau du collier de chasse, passe entre les jambes avant du cheval et est réunie à l'aide d'un anneau ou tout autre dispositif à la sous-ventrière 7. Celle-ci est fixée par des attaches ou crochets 13a aux anneaux 13 (figure 5) prévus sur l'arceau arrière 10 entre les points d'articulation des volets. Pour atteler le cheval au monobrancard, il suffit de lui enfiler par la tête l'ensemble berceau et collier et de venir ensuite mettre en place de chaque côté les crochets 13a de la sous-ventrière dans les anneaux 13 de l'arceau 10. Ceci assure le positionnement latéral du berceau sur le cheval, tandis qu'un culeron 29 relié également aux anneaux 13 assure le positionnement longitudinal du berceau.

Pour profiter au mieux de l'effort de traction du cheval, l'extrémité 28 des arceaux se trouve sur l'axe horizontal 20 passant par la base du cou du cheval et le collier de chasse se situe en majeure partie entre cet axe horizontal 20 et l'axe horizontal 21 passant par la pointe de l'épaule.

Le collier de chasse peut être remplacé par une bricole, pièce d'un seul tenant et traditionnellement utilisée pour la traction, mais l'effort du cheval s'effectue alors à la base du cou. On préfère donc utiliser un collier de chasse (utilisé pour les chevaux montés) avec lequel l'effort se répartit sur les deux épaules.

Le monobrancard 2 est relié au véhicule hippomobile 3 par un dispositif amortisseur et un dispositif d'équilibrage réglable que l'on décrira après une courte description du véhicule lui-même.

Ce véhicule est constituée par un châssis 30 monté sur deux roues 31 équipées de pneumatiques par l'intermédiaire de barres 32 et de suspensions 33. Un plancher 34, par exemple en treillis métallique (représenté sur la moitié du véhicule à la figure 2), permet à une ou plusieurs personnes de prendre place. Un siège 35 est prévu sur les montants arrière 36 de châssis (seule la structure de support du siège est représentée à la figure 2) de telle sorte que le poids du ou des passagers s'exerce essentiellement à la verticale (plan 37) de l'axe des roues 31 (figure 3).

L'extrémité arrière 38 du monobrancard 2 est fixée en 39 sur le châssis 30. Comme on le voit sur les dessins, la forme générale du monobrancard épouse celle du cheval et l'extrémité arrière 38 du monobrancard est oblique par rapport à la verticale. Un élément de support 40 est monté à l'avant du châssis 30. Cet élément 40 comporte deux parties latérales 41 sensiblement verticales et une partie centrale 42 horizontale sensiblement en arc de cercle ouvert vers l'avant du véhicule.

Cette partie en arc de cercle peut servir de poignée pour les passagers mais a essentiellement un rôle de support du dispositif amortisseur. Ce dispositif amortisseur 43 (représenté à plus grande échelle sur la figure 8) est constitué par un élément élastique 44 tendu, perpendiculairement à l'axe longitudinal du véhicule, entre les deux extrémités 45 de l'arc de cercle 42. Cet élément élastique est avantageusement constitué par un anneau en caoutchouc ou une bande de caoutchouc ou d'un autre élastomère repliée sur elle-même, relié aux points 45 par des organes de fixation 46 traversant l'anneau; ces organes de fixation 46 peuvent être des tiges 47 à extrémité filetée traversant l'anneau et maintenues par des écrous 48, comme représenté sur la figure 8 à titre illustratif.

La partie centrale de l'anneau élastique 44 est comprimée entre deux rondelles 49 dans le trou central desquelles passe un axe 50 relié rigidement au monobrancard 2. L'extrémité 51 de l'axe 50 fixée au monobrancard est montée en rotation sur une plaque 52 fixée au monobrancard, (par exemple dans un trou de la plaque à l'aide d'un boulon) à peu près au même niveau que l'épaule du cheval. De cette façon, le mouvement alternatif saccadé de traction du cheval est transmis à l'élément élastique qui l'amortit pour que la voiture soit entraînée de façon continue, sans saccades.

L'axe rigide 50 a une longueur réglable par exemple du fait de son interruption par un élément du type ridoir qui permet de rapprocher ou d'écarter la plaque 52 de l'élément élastique 44. Ceci permet de régler l'équilibre de la voiture hippomobile en fonction du cheval, du nombre et du poids de passagers, ...pour que l'avant du siège se trouve à la verticale du centre des roues (plan 37). Par ailleurs, le meneur a toujours la possibilité de modifier cet équilibre en se positionnant de façon appropriée dans le véhicule, en position assise ou debout, prenant appui sur la partie centrale du plancher 34, sur sa partie avant remontante ou sur l'une ou l'autre des parties latérales débordant au dessus des roues 31 (cf.fig.2).

Le véhicule hippomobile, le monobrancard et le berceau de traction sont représentés sur les dessins comme étant faits en tube d'acier. C'est une solution simple et facile à mettre en oeuvre, permettant une légèreté et une solidité adéquate tout en facilitant l'obtention des formes arrondies adaptées d'une part à la morphologie du cheval pour la partie monobrancard et berceau de traction et d'autre part à l'exigence de maniabilité et de sécurité de la partie véhicule. En effet les parties latérales en arrondi, débordant au dessus des roues et inclinées vers le sol permettant à ce véhicule de s'effacer lorsqu'il heurte accidentellement un obstacle (pierre, arbre, ...).

A titre d'exemple, l'élément de rotation 11 peut être un roulement à billes fixé à la plaque 12 par quatre boulons mais d'autres dispositifs permettant de relier le berceau à un monobrancard en assurant une libre rotation de celui-ci autour du point d'articulation sur le berceau peuvent bien entendu être envisagés.

Les éléments constitutifs du harnais, collier de chasse et sous-ventrière, sont construits et assemblés de façon classique, avec un rembourrage assurant le confort du cheval.

Bien entendu les dimensions du véhicule, du monobrancard et du berceau sont adaptées à la taille du cheval. Toutefois du fait de la présence des volets articulés, on peut sans problème se contenter d'adapter ces dimensions au type de cheval utilisé (poney, double poney, cheval, ...).

Un dispositif tel que décrit ici permet une très grande liberté de manoeuvre puisque le cheval a pratiquement la liberté de manoeuvre d'un cheval monté et que la forme et la structure du véhicule lui permettent de passer presque partout (il suffit que le passage disponible ait la largeur du véhicule), sur route, en forêt, dans les champs, etc...

## Revendications

1. Dispositif d'attelage pour véhicule hippomobile, comportant un monobrancard (2) passant au dessus du dos d'un cheval et relié, à sa partie avant, à un harnais (5,6,7) par l'intermédiaire d'un berceau de traction (4) sur lequel le monobrancard (2) est monté en rotation et, à sa partie arrière, à un véhicule hippomobile (3), dans lequel le berceau (4) comporte deux arceaux (9,10) réunis à leur partie inférieure pour la jonction avec un collier (5) de harnais et s'écartant progressivement l'un de l'autre jusqu'à atteindre une distance maximum à l'aplomb du garrot du cheval, un élément (11) solidaire du monobrancard (2) étant monté en rotation sur un organe (12) reliant les deux arceaux (9,10) au niveau de leur écartement maximum (donc à l'aplomb du garrot), caractérisé en ce que le berceau repose, par l'intermédiaire de deux volets (15,16) articulés montés sur l'arceau arrière (10) disposé obliquement pratiquement parallèlement à l'axe omoplate-pointe de l'épaule (19) du cheval et situés de part et d'autre de la ligne médiane du dos du cheval, sur les muscles superficiels à la jonction du dos, du garrot et de l'épaule du cheval.

2. Dispositif selon la revendication 1, caractérisé en ce que la face interne des volets en contact avec le dos du cheval est rembourrée et présente une section droite convexe dans la zone centrale du volet, dans un plan perpendiculaire au plan de l'arceau arrière, les parties latérales du volet de part et d'autre de l'arceau présentant une section concave dans des plans parallèles au plan de l'arceau et une section droite concave dans la zone centrale du volet, dans un plan parallèle au plan de l'arceau, les parties supérieure et inférieure du volet présentant elles une section convexe dans des plans perpendiculaires au plan de l'arceau.

3. Dispositif selon l'une ou l'autre des revendications 1 et 2, caractérisé en ce que les volets (15,16) ont une forme ovoïde présentant une pointe (22) et un gros bout (23), le gros bout constituant la base du volet.

4. Dispositif selon l'une quelconque des revendications 1 à 3, caractérisé en ce que chaque volet est articulé en deux points sur l'arceau arrière du berceau.

5. Dispositif selon l'une quelconque des revendications 1 à 4, caractérisé en ce que l'un des points d'articulation est monté fixe sur l'arceau et mobile sur le volet et l'autre est monté fixe sur le volet et mobile sur l'arceau.

6. Dispositif selon l'une quelconque des revendications 1 à 5, caractérisé en ce que le point de rattachement (28) du berceau (4) au collier (5) se situe sur la droite horizontale (20) passant par la base du cou du cheval.

7. Dispositif selon l'une quelconque des revendications 1 à 6, caractérisé en ce que le monobrancard (2) porté par le berceau (4) est relié à un véhicule (3) à roues (31) par l'intermédiaire d'un dispositif amortisseur-suspenseur.

8. Dispositif selon la revendication 7, caractérisé en ce que le dispositif amortisseur-suspenseur comporte un élément élastique (44) tendu selon un axe perpendiculaire à l'axe longitudinal de l'attelage véhicule hippomobile/monobrancard, entre deux points de fixation (45) sur ledit véhicule.

9. Dispositif selon l'une ou l'autre des revendications 6 et 7, caractérisé en ce que le dispositif amortisseur-suspenseur est relié au monobrancard par un dispositif d'équilibrage réglable (50,51,52).

10. Dispositif selon l'une quelconque des revendications 1 à 9, caractérisé en ce que le collier (5) est un collier de chasse de type américain ( "breath collar").

11. Dispositif selon l'une quelconque des revendications 1 à 10, caractérisé en ce que la sous-ventrière (7) vient se fixer de façon amovible sur des anneaux (13) portés par l'arceau arrière (10) du berceau de traction, les anneaux (13) se trouvant entre les points d'articulation arceau/volet.

## Patentansprüche

1. Pferdegeschirrvorrichtung für einen Pferdewagen, die einen Einzeltragbaum (2) aufweist, der über dem Rücken eines Pferdes verläuft und in seinem vorderen Teil mit einem Geschirr (5, 6, 7) mittels eines Zugsattels (4), auf dem der Einzeltragbaum (2) drehbar angebracht ist, verbunden ist, und der in seinem rückwärtigen Teil mit einem Pferdewagen (3) verbunden ist, wobei der Sattel (4) zwei Bügel (9, 10) aufweist, die in ihrem unteren Teil zusammenlaufen und dort mit einem Kummet (5) des Geschirrs verbunden sind, und die sich fortlaufend voneineinder wegspreizen und senkrecht über dem Widerrist des Pferdes einen maximalen Abstand erreichen, wobei ein einstückig mit dem Einzeltragbaum (2) verbundenes Teil (11) drehbar auf einem Organ (12) angebracht ist, das die beiden Bügel (9, 10) im Bereich ihres größten Abstands (also senkrecht über dem Widerrist) verbindet, dadurch gekennzeichnet, daß der Sattel mittels zweier Klappen (15, 16), die beweglich an dem hinteren Bügel (10) angebracht und schräg sowie im wesentlichen parallel zur Achse Schulterblatt - Spitze der Schulter (19) des Pferdes und beiderseits der Mittellinie des Pferderückens angeordnet sind, auf den Oberflächenmuskeln an der Vereinigung des Rückens, des Widerrists und der Schulter des Pferdes ruht.

2. Vorrichtung nach Anspruch 1, dadurch gekennzeichnet, daß die mit dem Pferderücken in Berührung stehende Innenfläche der Klappen gepolstert ist und in einem mittleren Bereich der Klappe in einer Ebene senkrecht zur Ebene des hinteren Bügels einen konvexen Querschnitt aufweist, wobei die seitlichen Bereiche der Klappen beiderseits des Bügels einen konkaven Querschnitt in Ebenen parallel zur Ebene des Bügels und in einem mittleren Bereich der Klappe einen konkaven Querschnitt in einer Ebene parallel zur Ebene des Bügels aufweisen, und wobei die oberen und unteren Bereiche der Klappe jeweils einen konvexen Querschnitt in den Ebenen senkrecht zur Ebene des Bügels aufweisen.

3. Vorrichtung nach einem der Ansprüche 1 oder 2, dadurch gekennzeichnet, daß die Klappen (15, 16) eiförmig sind und eine Spitze (22) und ein breites Ende (23) aufweisen, wobei das breite Ende die Basis der Klappe bildet.

4. Vorrichtung nach einem der Ansprüche 1 bis 3, dadurch gekennzeichnet, daß jede Klappe an zwei Punkten auf dem hinteren Bügel des Sattels angelenkt ist.

5. Vorrichtung nach einem der Ansprüche 1 bis 4, dadurch gekennzeichnet, daß einer der Anlenkpunkte fest auf dem Bügel und beweglich auf der Klappe und der andere Anlenkpunkt fest auf der Klappe und beweglich auf dem Bügel angebracht ist.

6. Vorrichtung nach einem der Ansprüche 1 bis 5, dadurch gekennzeichnet, daß der Verbindungspunkt (28) des Sattels (4) mit dem Kummet (5) sich auf einer horizontalen Geraden (20) befindet, die durch den Unterteil des Pferdehalses verläuft.

7. Vorrichtung nach einem der Ansprüche 1 bis 6, dadurch gekennzeichnet, daß der von dem Sattel (4) getragene Aufhängeeinrichtung mit einem Wagen (3) mit Rädern (31) verbunden ist.

8. Vorrichtung nach Anspruch 7, dadurch gekennzeichnet, daß die stoßdämpfende Aufhängeeinrichtung ein elastisches, zwischen zwei Befestigungspunkten (45) an dem Wagen entlang einer Achse senkrecht zur Längsachse des Pferdegeschirrs für den Pferdewagen mit Einzeltragbaum gespanntes Element (44) aufweist.

9. Vorrichtung nach einem der Ansprüche 6 oder 7, dadurch gekennzeichnet, daß die stoßdämpfende Aufhängeeinrichtung mit dem Einzeltragbaum mittels einer einstellbaren Ausgleichseinrichtung (50, 51, 52) verbunden ist.

10. Vorrichtung nach einem der Ansprüche 1 bis 9, dadurch gekennzeichnet, daß das Kummet (5) ein Jagdkummet vom amerikanischen Typus ("breath collar") ist.

11. Vorrichtung nach einem der Ansprüche 1 bis 10, dadurch gekennzeichnet, daß der Bauchriemen (7) lösbar an dem von dem hinteren Bügel (10) des Zugsattels getragenen Ring (13) befestigt ist, wobei der Ring (13) sich zwischen den Anlenkpunkten Bügel/Klappe befindet.

## Claims

1. A hitch for a horse-drawn vehicle comprising a single shaft (2) passing over the back of a horse and connected at its front end to a harness (5, 6, 7) by means of a traction cradle (4) to which the single shaft (2) is rotatable mounted and at its rear end to a horsedrawn vehicle (3), the cradle (4) comprising two arcuate front and rear frame members (9, 10) interconnected at their bottom ends in order to be connected to a collar (5) of the harness and diverging progressively from each other to reach a maximum separation vertically over the horse's withers, an element (11) integral with the single shaft (2) being rotatably mounted on a member (12) interconnecting the two frame members (9, 10) where they are at maximum front to rear separation (i.e. over the withers), characterized in that the cradle rests on the superficial muscles where the horse's back, withers, and shoulders meet by means of two pads (15, 16) connected by swivel mounts to the rear frame member (10) which is disposed obliquely and practically parallel to the axis (19) running from the horse's shoulder blade to the point of its shoulder, the pads being situated on either bide of the midline of the horse's back.

2. A hitch according to claim 1, characterized in that the inside face of each pad in contact with the horse's back is padded and has a convex right cross-section in the central zone of the pad in a plane perpendicular to the plane of the rear frame member, the lateral portions of the pads on either side of the frame member being concave in section in planes parallel to the plane of the frame member and having a concave right cross-section in the central zone of the pad in a plane parallel to the plane of the frame member, the top and bottom portions of the pad being convex in section in planes perpendicular to the plane of the frame member.

3. A hitch according to claim 1 or 2, characterized in that the pads (15, 16) are generally egg-shaped, each having a tip (22) and a big end (23); with the big end constituting the base of the pad .

4. A hitch according to any of claims 1 to 3, characterized in that each pad is connected to the rear frame member of the cradle at two points by respective swivel mounts.

5. A hitch according to any of claims 1 to 4, characterized in that one of the swivel mounts is fixed on the rear frame member and moves on the pad, while the other is fixed on the pad and moves on the rear frame member.

6. A hitch according to any of claims 1 to 5, characterized in that the point (24) where the cradle (4) is connected to the collar (5) lies on the same horizontal level (20) as the base of the horse's neck.

7. A hitch according to any of claims 1 to 6, characterized in that the single shaft (2) carried by the cradle (4) is connected to a vehicle (3) with wheels (31) via a shock-absorbing suspension.

8. A hitch according to claim 7, characterized in that the shock-absorbing suspension includes a piece (44) of elastic stretched along an axis perpendicular to the longitudinal axis of the single-shaft horse-drawn vehicle hitch between two fixing points (45) on said vehicle.

9. A hitch according to claim 6 or 7, characterized in that the shock-absorbing suspension is connected to the single shaft via an adjustable balancing device (50, 51, 52).

10. A hitch according to claim 1, wherein the collar is an American type hunting collar ( "breath collar" ).

11. A hitch according to any of claims 1 to 10, characterized in that a girth (7) is removably fixed to rings (13) carried by the rear frame member (10) of the traction cradle, the rings (13) lying intermediate the swivel mounts between the rear frame member and the pads.
